# EUROPEAN PATENT SPECIFICATION

(11) **EP 2 630 581 B1**
(45) Date of publication and mention of the grant of the patent: **27.03.2019**
(21) Application number: 10858749.4
(22) Date of filing: 20.10.2010
(51) Int. Cl.: G06F 15/16, G06F 13/14, G06F 17/21, G06F 17/30, H04L 29/08

(54) **STORE CLIENT SIDE DATA**
SPEICHERUNG VON CLIENTSEITIGEN DATEN
STOCKAGE DE DONNÉES CÔTÉ CLIENT

(43) Date of publication of application: 28.08.2013
(73) Proprietor: Hewlett-Packard Development Company, L.P., Houston, TX 77070 (US)
(72) Inventor: HOCHMUTH, Roland M., Fort Collins Colorado 80528 (US)
(74) Representative: HGF Limited
(86) International application number: PCT/US2010/053337
(87) International publication number: WO 2012/054026

(56) References cited:
- US-A1- 2006 253 773
- US-A1- 2009 259 744
- US-A1- 2009 259 744
- US-A1- 2010 162 142
- US-A1- 2011 006 681

## Description

### Background

A computer runs applications that perform tasks. The applications may be programmed using a language such as C, C++, Java or another language. Applications, for example a word processors or database, can store data such as a text document generated by the word processor or a data entry in a table of a database. A webpage can be programmed using a language such as hypertext markup language (HTML). HTML is a scripting language that defines the way text, picture, links appear to a user accessing a webpage. A web browser can render an HTML document for viewing using a layout engine such as webkit. An application may use multiple languages to complete tasks for example programming text in Java may be less efficient than programming the text in HTML and using a layout engine to render the HTML.

US20090259744 and WO2009139437 (=US20110066681) disclose related art.

Aspects of the invention are set out in the independent claims

### Brief Description Of The Drawings

Some embodiments of the invention are described with respect to the following figures:
Fig. 1 is a block diagram of a device according to an example embodiment;
Fig. 2 is a block diagram of a system according to an example embodiment;
Fig. 3 is a flow chart of a method according to an example embodiment;
Fig. 4 is a flow chart of a method according to an example embodiment; and
Fig. 5 is a block diagram of a system according to an example embodiment.

### Detailed Description

An operating system controls the operation of a computer and directs the processing of programs. The direction and processing of programs can be by assigning storage space in memory and controlling input and output functions. An operating system may have a script language layout engine, for example webkit®. A layout engine takes marked up content (such as HTML, XML, image files, etc.) and formatting information (such as CSS, XSL, etc.) and displays the formatted content on the screen. An example of an operating system that includes a layout engine is Palm WebOS®.

To make the downloading of data more efficient a device running an operating system can include a layout engine to render the data. Applications that are at least part script language that is rendered by a layout engine on the device may use less memory to store and thus may be more efficient to transfer between devices. For example, Applications that at least partially include html code can be transferred from a server to a client device or from a first device to a second device and rendered by the layout engine on the receiving device may be more efficient than a program that does not use a layout engine.

A web based application is an application that is executed by pointing a web browser toward a Uniform Resource Locator (URL). The web based application is rendered by the web browser. The web based application may look similar to an application that is running on a computer, for example a web based word processor running in a browser may appear similar to a word processor running on the operating system. The web based application running in the web browser has access to storage on the system serving the web based application to the web browser running the application. For example the web based application can store data generated by the web based application on the system serving the web based application. If a web browser can store client side data the web based application may appear similar to an application running on a client.

A device with an operating system that includes a layout engine to render applications that include HTML can be connected to another device. Applications on the device may be executed by the other device. Depending on the application the client side data may be stored on the device or the other device. For example, client side data for a game may be stored on the device and client side data from a word processing application may be stored on the other device. Where to store the client side data may be determined by the user of the application, based on capacity of the device and the other device, based on the application or other criteria.

In one embodiment, a device includes a receiver to receive a code from a second device. At least a portion of the code may be a scripting language. A storage device can store client side data from the code. A controller can execute the code and determine if the client side data is stored in at least one of the storage and the second device.

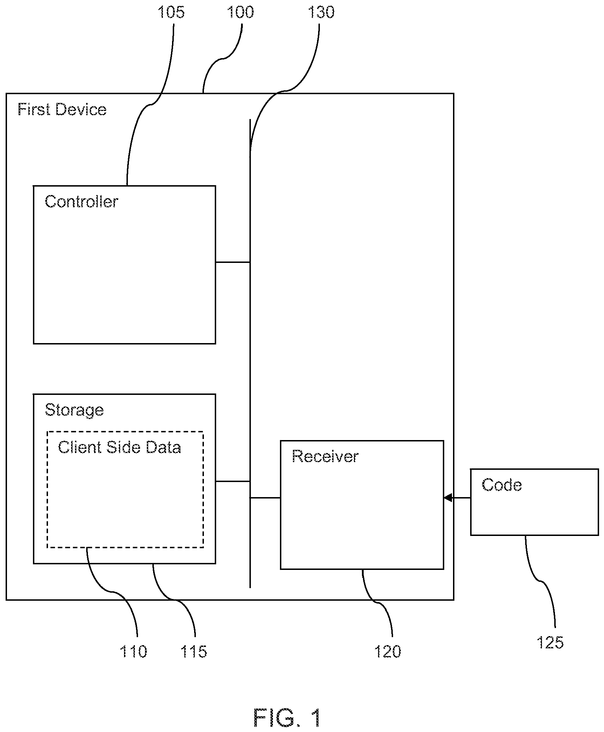

With reference to the figures, Fig. 1 is a block diagram of a first device 100 according to an example embodiment. The first device 100 includes a receiver 120 to receive a code 125 from a second device. The device 100 may be a portable system such as a cell phone, or notebook computer. The second device may be a portable system such as a cell phone or notebook computer or may be a stationary device such as a tower or all in one. The code 125 can be an application and at least a portion of the code 125 is a scripting language. A scripting language is a language that is rendered by a layout engine. The scripting language can be for example a hypertext markup language, extensible markup language (XML) or another scripting language. If the scripting language is HTML the layout engine may be for example web kit™.

A storage 115 in the first device 100 can store client side data 110 from the code 125. The client side data 110 may be generated by a controller 105 if the code 125 is executed by the controller 105. The controller 105 may be for example a general purpose processor, may be a graphics processor or may be an application specific integrated circuit (ASIC). A general purpose processor can process a variety of instruction from different operating system or applications such as a web browser that is executed by the controller 105 on the First Device 100, a word processor executed by the controller 105 on the first device 100 or another application executed by the controller 105 on the first device 100.

The controller 105 can also determine if the client side data 110 is stored in at least one of the storage 115 and the second device. The storage 115 can be for example volatile memory such as random access memory (RAM) or non-volatile memory such as a hard disk drive, optical media, flash memory or another storage device.

The first device may include logic to determine the origin of the code. The logic may be hardware, firmware or computer readable instructions. The origin of the code may be determined to be one of the first device or an external device such as the second device. The logic may determine where to store the client side data based on the origin of the code. For example the logic may determine to store client side date generated by executing the code in the second device if the code was received from the second device and store the client side data in the storage 115 if the code was not received from an external source such as the second device. The logic may also use other criteria for determining where to store the client side data such as user controlled, application controlled or another criteria. The user controlled criteria may include a prompt to the user such as a message to the user to select where to store the client side date. The prompt to the user may be for example when the application begins execution, when the application generates the client side data, when the application is closed or at another time. If the criteria is application controlled the application may determine where to store the client side data as predetermined by the author of the application or may be dynamically decided by the application.

In one embodiment the layout engine may generate a database or use an existing data base. The client side data can be stored in a data base on the first device or an external source such as a second device.

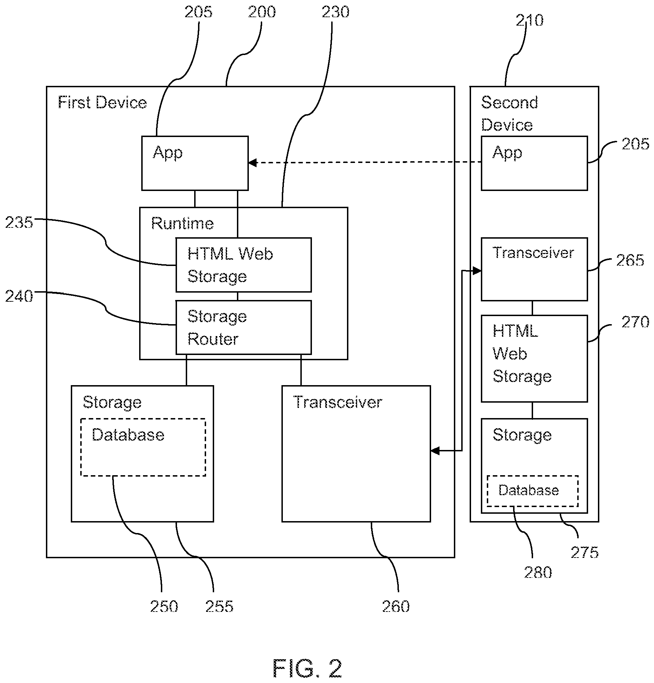

Fig. 2 is a block diagram of a system according to an example embodiment. The system includes a first device 200 connected to a second device 210. The first device has a runtime 230 that executes an application 205. The application can be copied or transferred to the first device 200 from the second device 210.

The runtime 230 can include an HTML web storage and a storage router 240. The HTML web storage stores data generated by the runtime 230. The storage router 240 determines where to send the client side data generated by the application 205. The storage router 240 may send the client side data to the storage 255 on the first device 200. The storage 255 on the first device may include a database 250 that is used to store the data on the storage 250.

If the storage router 240 determines that the client side data generated by the application 205 is stored in the second device the storage router 240 sends the client side data to a transceiver 260 connected to another transceiver 265 in the second device 210. The transceiver 260 and transceiver 265 may be wired or wireless. For example the transceivers 260 and 265 may be 802.11 wifi, Bluetooth®, wireless universal serial bus (USB), a cellular data protocol or another wireless protocol as well as wired protocols such as USB, IEEE1394, (Serial Advanced Technology Attachment) SATA or another wired protocol. In one embodiment the client side data is reformatted prior to transmission to the second device 210 by the transceivers 260 and 256.

The transceiver 265 in the second device 210 may be connected by a bus to the HTML web storage 270 and the storage 275 on the second device. If the client side data can be stored in a database then a database 280 may be generated to store the client side data.

The transceivers 260 and 265 may be used to transmit the application 205. For example if the first device 200 requests the application 205 from the second device 210 then the transceivers 260 and 265 may copy the application 205 from the second device 210 to the first device 200. The application may also be transferred from the second device 210 to the first device 200 wherein it is not stored on the second device 210 after this transfer. In one embodiment a portion of an application may be transferred from the second device 210 to the first device 200.

After the application 205 is executed by the runtime 230 on the first device the application 205 may remain on the first device 200 for execution of the application 205 in the future, may be deleted from the first device 205 or may be transferred back to the second device 210 for example. An application 205 may be updated by the first device 200 prior to transferring the application 205 back to the second device 210.

If the connection between the first device 200 and the second device 210 is disconnected the first device may determine what to do. For example the first device may suspend execution of the application 205 until the first device 200 is connected to the second device 210 so that client side data that is to be stored on the second device 210 is stored on the second device 210. The first device may also store the client side data to be stored on the second device in the storage 255 until the client side data can be stored in the second device 210.

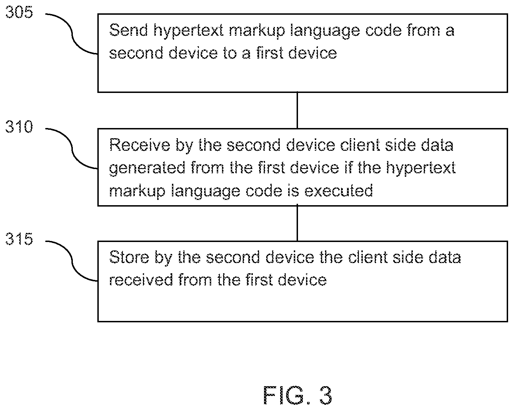

Fig. 3 is a flow chart of a method according to an example embodiment. The method is to operate a second device if connected to a first device. The second device can send hypertext markup language (HTML) code from a second device to a first device at 305. The second device may send the HTML code to the first device if the first device requests the HTML code. The HTML code may be an application to perform a task. The first device may execute the HTML code. The execution of the HTML code on the first device may generate client side data. The first device may determine that the client side data should be stored on the second device.

The second device can receive the client side data generated from the first device if the hypertext markup language code is executed at 310. The client side data may be communicated to the second device by a transceiver for example.

The second device can store the client side data received from the first device at 315. The second device may store the client side data in a volatile or non-volatile memory.

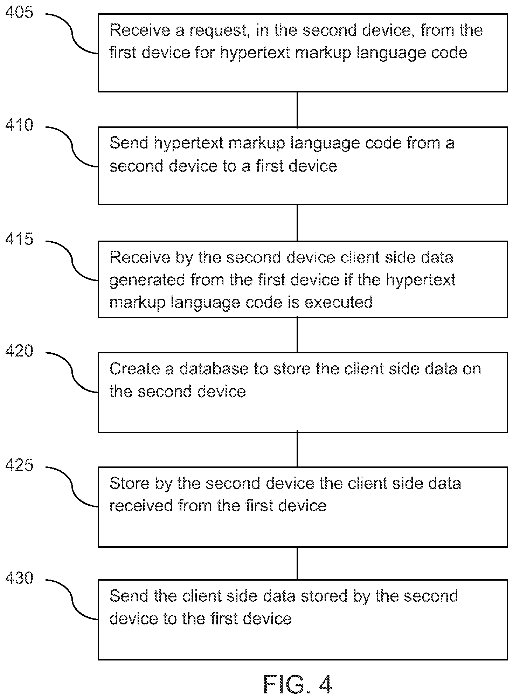

Fig. 4 is a flow chart of a method according to an example embodiment. The method is to operate a second device if connected to a first device. The second device can receive a request by the first device for HTML code from the second device at 405.

The second device can send hypertext markup language (HTML) code from a second device to a first device at 410. The HTML code may be an application to perform a task. The first device may execute the HTML code. The execution of the HTML code on the first device may generate client side data. The first device may determine that the client side data should be stored on the second device.

The second device can receive the client side data generated from the first device if the hypertext markup language code is executed at 415. The client side data may be communicated to the second device by a transceiver for example.

The second device may create a database to store the client side data in the second device at 420. The second device can store the client side data received from the first device at 425. The second device may store the client side data in a volatile or non-volatile memory.

An execution of the HTML code in the first device may cause the first device to request the client side data from the second device. The second device can send the client side data stored by the second device to the first device. For example the HTML code can be a game that can be played by a user on the second device or copied to the first device to be played. If the game generates client side data such as user preferences and game status the first device may store the client side data on the second device so that if the game is executed by the second device the user preferences and game status is available after the first device and the second device are disconnected. If the first device is reconnected to the second device the second device may send the client side data to the first device to be available to the game if the game is executed on the first device.

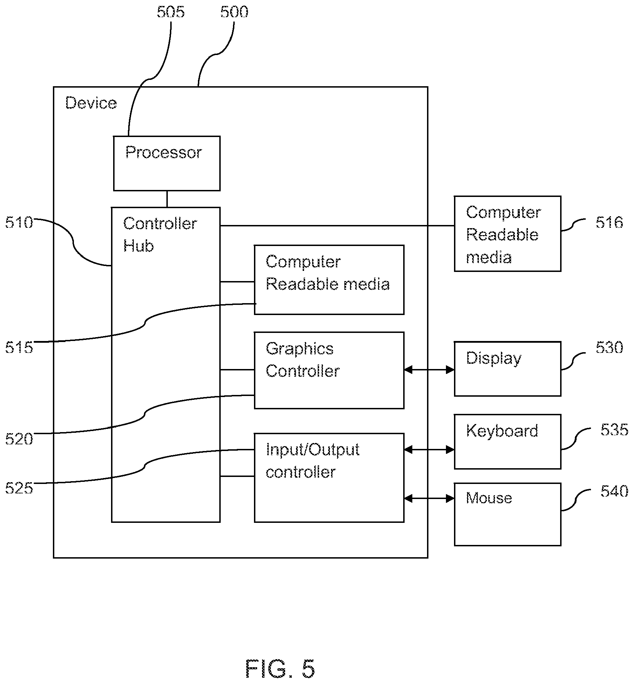

Fig. 5 is a block diagram of a device 500 according to an example embodiment. For example the device 500 may be a first device or a second device as described in relation to other embodiments. The device 500 can include a processor 505 connected to a controller hub 510. The controller hub 510 can be connected to a graphics controller 520, an input/output controller 525 or computer readable media 515 or 516. The at least one of the processor 505, controller hub 510, input/output controller 525, graphic controller 520 may be in one circuit package or on one circuit die.

The processor 505 may be a general purpose processor that can perform a variety of tasks. The controller hub 510 can connect the processor 505 to controllers. The Input/output controller 525 may include for example USB controllers, IEEE1394 controllers, wifi controllers or other input/output controllers. The input/output controller may connect peripherals such as a keyboard and mouse to the device 500 or may connect device 500 to another device. The graphics controller 520 can process graphics to display on a display 530. The keyboard, mouse and display may be in the same enclosure as the other components of the device 500 or may be external to the device 500 for example.

The controller hub 510 may also connect to a computer readable media 515 or 516. If, for example, the device 500 is a first device the computer readable media may include instructions that if executed by the processor cause the device to execute code on the device to generate client side data. The instructions can send client side data to a second device to be stored if the code that generated the client side data originated on the second device. The instructions can store the client side data on the first device if the code that generated the client side data originated on the first device.

The instructions can create a database to store the client side data on the first device. The instructions can convert the format of the client side data to a format for sending the client side data to the second device. The instructions can request code to execute from a second device. The instructions can synchronize the client side data stored on the first device with the client side data sent to the second device.

The techniques described above may be embodied in a computer-readable medium for configuring a computing system to execute the method. The computer readable media may include, for example and without limitation, any number of the following: magnetic storage media including disk and tape storage media; optical storage media such as compact disk media (e.g., CD-ROM, CD-R, etc.) and digital video disk storage media; holographic memory; nonvolatile memory storage media including semiconductor-based memory units such as FLASH memory, EEPROM, EPROM, ROM; ferromagnetic digital memories; volatile storage media including registers, buffers or caches, main memory, RAM, etc.; and the Internet, just to name a few. Other new and various types of computer-readable media may be used to store and/or transmit the software modules discussed herein. Computing systems may be found in many forms including but not limited to mainframes, minicomputers, servers, workstations, personal computers, notepads, personal digital assistants, various wireless devices and embedded systems, just to name a few.

In the foregoing description, numerous details are set forth to provide an understanding of the present invention. However, it will be understood by those skilled in the art that the present invention may be practiced without these details. While the invention has been disclosed with respect to a limited number of embodiments, those skilled in the art will appreciate numerous modifications and variations therefrom. It is intended that the appended claims cover such modifications and variations as fall within the true scope of the invention.

## Claims

1. A first device comprising:
a receiver to receive a code from the first device or from a second device, wherein at least a portion of the code is a scripting language;
logic to determine origin of the code;
a storage in the first device to store client side data from the code; and
a controller to execute the code and determine if the client side data is to be stored in one of the storage and the second device, based on the origin of the code.

2. The first device of claim 1, wherein the scripting language is hypertext markup language.

3. The first device of claim 1, further comprising a web browser executable by the controller of the first device.

4. The first device of claim 1, further comprising a database to store the client side data.

5. A method performed by a first device comprising steps that, if executed, cause a processor of the first device to:
execute code on the first device to generate client side data; send client side data to a second device to be stored if the code that generated the client side data originated on the second device; and
store the client side data on the first device if the code that generated the client side data originated on the first device.

6. The method of claim 5, further comprising steps, that if executed, cause the processor of the first device to:
create a database to store the client side data on the first device.

7. The method of claim 5, further comprising steps, that if executed, cause the processor of the first device to:
convert the format of the client side data to a different format, and send the client side data to the second device in the different format.

8. The method of claim 5, further comprising steps, that if executed, cause the processor of the first device to:
request code to execute from the second device.

9. The method of claim 5, further comprising steps, that if executed, cause the processor of the first device to:
synchronize the client side data stored on the first device with the client side data sent to the second device.

10. A computer readable medium comprising instructions that if executed cause a processor of a first device to:
execute code on the first device to generate client side data;
send client side data to a second device to be stored if the code that generated the client side data originated on the second device; and
store the client side data on the first device if the code that generated the client side data originated on the first device.

11. The computer readable medium of claim 10 further comprising instructions that if executed cause the processor of the first device to: create a database to store the client side data on the first device.

12. The computer readable medium of claim 10 further comprising instructions that if executed cause the processor of the first device to: convert the format of the client side data to a different format and send the client side data to the second device in the different format.

13. The computer readable medium of claim 10 further comprising instructions that if executed cause the processor of the first device to:
request code to execute from the second device.

14. The computer readable medium of claim 10 further comprising instructions that if executed cause the processor of the first device to: synchronize the client side data stored on the first device with the client side data sent to the second device.

## Patentansprüche

1. Erste Vorrichtung, umfassend:
einen Empfänger, um einen Code von der ersten Vorrichtung oder von einer zweiten Vorrichtung zu empfangen, wobei mindestens ein Teil des Codes eine Skriptsprache ist;
Logik, um einen Ursprung des Codes zu bestimmen;
einen Speicher in der ersten Vorrichtung, um clientbezogene Daten aus dem Code zu speichern; und
einen Kontroller, um den Code auszuführen und zu bestimmen, ob die clientbezogenen Daten auf der Basis des Ursprungs des Codes in dem Speicher oder in der zweiten Vorrichtung zu speichern sind.

2. Erste Vorrichtung nach Anspruch 1, wobei die Skriptsprache die Hypertext-Auszeichnungssprache (Hypertext Markup Language) ist.

3. Erste Vorrichtung nach Anspruch 1, ferner umfassend einen Webbrowser, der vom Kontroller der ersten Vorrichtung ausgeführt werden kann.

4. Erste Vorrichtung nach Anspruch 1, ferner umfassend eine Datenbank zum Speichern der clientbezogenen Daten.

5. Verfahren, das von einer ersten Vorrichtung ausgeführt wird und Schritte umfasst, die, wenn ausgeführt, einen Prozessor der ersten Vorrichtung veranlassen:
den Code auf der ersten Vorrichtung auszuführen, um clientbezogene Daten zu erzeugen;
clientbezogene Daten an eine zweite Vorrichtung zu senden, um gespeichert zu werden, wenn der Code, der die clientbezogenen Daten erzeugte, aus der zweiten Vorrichtung stammte, und
die clientbezogenen Daten auf der ersten Vorrichtung zu speichern, wenn der Code, der die clientbezogenen Daten erzeugte, aus der ersten Vorrichtung stammte.

6. Verfahren nach Anspruch 5, ferner umfassend Schritte, die, wenn ausgeführt, den Prozessor der ersten Vorrichtung veranlassen:
eine Datenbank zu erstellen, um die clientbezogenen Daten auf der ersten Vorrichtung zu speichern.

7. Verfahren nach Anspruch 5, ferner umfassend Schritte, die, wenn ausgeführt, den Prozessor der ersten Vorrichtung veranlassen:
das Format der clientbezogenen Daten in ein anderes Format umzuwandeln und die clientbezogenen Daten zu der zweiten Vorrichtung in dem anderen Format zu senden.

8. Verfahren nach Anspruch 5, ferner umfassend Schritte, die, wenn ausgeführt, den Prozessor der ersten Vorrichtung veranlassen:
den Code zum Ausführen von der zweiten Vorrichtung anzufordern.

9. Verfahren nach Anspruch 5, ferner umfassend Schritte, die, wenn ausgeführt, den Prozessor der ersten Vorrichtung veranlassen:
die auf der ersten Vorrichtung gespeicherten clientbezogenen Daten mit den an die zweite Vorrichtung gesendeten clientbezogenen Daten zu synchronisieren.

10. Computerlesbares Medium, umfassend Anweisungen, die, wenn ausgeführt, einen Prozessor der ersten Vorrichtung veranlassen:
den Code auf der ersten Vorrichtung auszuführen, um clientbezogene Daten zu erzeugen;
clientbezogene Daten an eine zweite Vorrichtung zu senden, um gespeichert zu werden, wenn der Code, der die clientbezogenen Daten erzeugte, aus der zweiten Vorrichtung stammte; und
die clientbezogenen Daten auf der ersten Vorrichtung zu speichern, wenn der Code, der die clientbezogenen Daten erzeugte, aus der ersten Vorrichtung stammte.

11. Computerlesbares Medium nach Anspruch 10, ferner umfassend Anweisungen, die, wenn ausgeführt, den Prozessor der ersten Vorrichtung veranlassen:
eine Datenbank zu erstellen, um die clientbezogenen Daten auf der ersten Vorrichtung zu speichern.

12. Computerlesbares Medium nach Anspruch 10, ferner umfassend Anweisungen, die, wenn ausgeführt, den Prozessor der ersten Vorrichtung veranlassen:
das Format der clientbezogenen Daten in ein anderes Format umzuwandeln und die clientbezogenen Daten an die zweite Vorrichtung in dem anderen Format zu senden.

13. Computerlesbares Medium nach Anspruch 10, ferner umfassend Anweisungen, die, wenn ausgeführt, den Prozessor der ersten Vorrichtung veranlassen:
einen Code zum Ausführen von der zweiten Vorrichtung anzufordern.

14. Computerlesbares Medium nach Anspruch 10, ferner umfassend Anweisungen, die, wenn ausgeführt, den Prozessor der ersten Vorrichtung veranlassen:
die auf der ersten Vorrichtung gespeicherten clientbezogenen Daten mit den an die zweite Vorrichtung gesendeten Daten zu synchronisieren.

## Revendications

1. Premier dispositif comprenant :
un récepteur permettant de recevoir un code en provenance du premier dispositif ou d'un second dispositif, au moins une partie du code étant un langage de script ;
une logique permettant de déterminer l'origine du code ;
un espace de stockage dans le premier dispositif, permettant de stocker des données côté client à partir du code ; et
une unité de commande permettant d'exécuter le code et de déterminer si les données côté client doivent être stockées dans l'un de l'espace de stockage et du second dispositif, en fonction de l'origine du code.

2. Premier dispositif selon la revendication 1, dans lequel le langage de script est un langage de balisage hypertexte.

3. Premier dispositif selon la revendication 1, comprenant en outre un navigateur Web exécutable par l'unité de commande du premier dispositif.

4. Premier dispositif selon la revendication 1, comprenant en outre une base de données permettant de stocker les données côté client.

5. Procédé mis en oeuvre par un premier dispositif et comprenant des étapes qui, si elles sont exécutées, amènent un processeur du premier dispositif à :
exécuter du code sur le premier dispositif pour générer des données côté client ;
envoyer, à un second dispositif, les données côté client à stocker si le code ayant généré les données côté client provient du second dispositif ; et
stocker les données côté client sur le premier dispositif si le code ayant généré les données côté client provient du premier dispositif.

6. Procédé selon la revendication 5, comprenant en outre des étapes qui, si elles sont exécutées, amènent le processeur du premier dispositif à :
créer une base de données permettant de stocker les données côté client sur le premier dispositif.

7. Procédé selon la revendication 5, comprenant en outre des étapes qui, si elles sont exécutées, amènent le processeur du premier dispositif à :
convertir le format des données côté client en un format différent et à envoyer les données côté client au second dispositif dans le format différent.

8. Procédé selon la revendication 5, comprenant en outre des étapes qui, si elles sont exécutées, amènent le processeur du premier dispositif à :
demander le code à exécuter à partir du second dispositif.

9. Procédé selon la revendication 5, comprenant en outre des étapes qui, si elles sont exécutées, amènent le processeur du premier dispositif à :
synchroniser les données côté client stockées sur le premier dispositif avec les données côté client envoyées au second dispositif.

10. Support lisible par ordinateur comprenant des instructions qui, si elles sont exécutées, amènent un processeur d'un premier dispositif à :
exécuter du code sur le premier dispositif pour générer des données côté client ;
envoyer, à un second dispositif, les données côté client à stocker si le code ayant généré les données côté client provient du second dispositif ; et
stocker les données côté client sur le premier dispositif si le code ayant généré les données côté client provient du premier dispositif.

11. Support lisible par ordinateur selon la revendication 10, comprenant en outre des instructions qui, si elles sont exécutées, amènent le processeur du premier dispositif à :
créer une base de données permettant de stocker les données côté client sur le premier dispositif.

12. Support lisible par ordinateur selon la revendication 10, comprenant en outre des instructions qui, si elles sont exécutées, amènent le processeur du premier dispositif à :
convertir le format des données côté client en un format différent et envoyer les données côté client au second dispositif dans le format différent.

13. Support lisible par ordinateur selon la revendication 10, comprenant en outre des instructions qui, si elles sont exécutées, amènent le processeur du premier dispositif à :
demander le code à exécuter à partir du second dispositif.

14. Support lisible par ordinateur selon la revendication 10, comprenant en outre des instructions qui, si elles sont exécutées, amènent le processeur du premier dispositif à :
synchroniser les données côté client stockées sur le premier dispositif avec les données côté client envoyées au second dispositif.
